(19) Europäisches Patentamt
European Patent Office
Office européen des brevets

(11) Veröffentlichungsnummer: **0 000 714**
**B1**

(12) **EUROPÄISCHE PATENTSCHRIFT**

(45) Veröffentlichungstag der Patentschrift: **31.03.82**

(51) Int. Cl.³: **C 08 G 69/48,** D 21 H 3/58

(21) Anmeldenummer **78100444.5**

(22) Anmeldetag **19.07.78**

(54) **Hilfsmittel zur Verbesserung der Retention, Entwässerung und Aufbereitung, insbesondere bei der Papierherstellung.**

(30) Priorität: **13.08.77 DE 2736651**

(43) Veröffentlichungstag der Anmeldung
**21.02.79 Patentblatt 79/4**

(45) Bekanntmachung des Hinweises auf die Patenterteilung:
**31.03.82 Patentblatt 82/13**

(84) Benannte Vertragsstaaten:
**CH DE FR GB NL SE**

(56) Entgegenhaltungen:
**FR-A-2 004 880**
**FR-A-2 013 072**
**FR-A-2 330 799**

(73) Patentinhaber: **Wolff Walsrode Aktiengesellschaft, Postfach, D-3030 Walsrode (DE)**

(72) Erfinder: **Behn, Rudolf, Rembrandtwinkel 8, D-3030 Walsrode (DE)**
Erfinder: **Hoppe, Lutz, Dr., Am Badeteich 8, D-3030 Walsrode (DE)**
Erfinder: **Böhmer, Branislav, Dr., Moorstrasse 61, D-3030 Walsrode (DE)**

(74) Vertreter: **Kutzenberger, Helga (AT) et al, BAYER AG Zentralbereich Patente, Marken und Lizenzen, D-5090 Leverkusen, Bayerwerk (DE)**

**EP 0 000 714 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Hilfsmittel zur Verbesserung der Retention, Entwässerung und Aufbereitung, insbesondere bei der Papierherstellung

Die Erfindung betrifft Polyethylenglykol-Polyaminoamid-Kondensationsprodukte zur Retentionsverbesserung von ausschwemmbaren Feststoffen, zur Entwässerungsbeschleunigung von Suspensionen und zur rascheren Aufbereitung von industriellen Wässern, Abwässern und Schlämmen, insbesondere in der Papierindustrie.

Derartige Polymere und ihre Verwendung im oben aufgeführten Sinn bei der Papierherstellung sind bereits in der Fachwelt aus zahlreichen Veröffentlichungen bekannt. So sind in der DE-AS 1 546 290 Umsetzungsprodukte aus Polyalkylenpolyaminen und bifunktionellen Polyalkylenoxidderivaten beschrieben, die sich zwar für die Flotation von Fasern und Füllstoffen aus Papiermaschinenabwässern, jedoch nicht gleichzeitig auch, wie es an sich wünschenswert wäre, für den Einsatz als Retentions- und Entwässerungshilfsmittel in der Papierstoffindustrie gleich gut eignen. Auch in der US-PS 3 575 797 sind viskose Flotationsmittel für Papiermaschinenabwässer beschrieben. Diese Flotationsmittel sind Reaktionsprodukte von Polyalkylenpolyaminen mit Polyethylenglykolderivaten, die wenigstens 2 Chlorameisensäureester-Gruppen enthalten. Leider sind diese Produkte nur als eine 10%ige Lösung herstellbar und weisen überdies nur relativ geringe Retentions- und Entwässerungsleistungen auf.

Andere, für den oben angeführten Zweck empfohlene Hilfsmittel sind aus der DE-OS 2 162 567 zu ersehen. Hier wird an einen Polyäther mit fadenförmiger Molekülstruktur und endständigen tertiären Aminogruppen (Herstellung des Polyäthers zum Beispiel aus Glykol, Epichlorhydrin und Dimethylamin) ein Polyaminoamid (Herstellung des Polyaminoamids zum Beispiel durch Kondensation von Adipinsäure und Diäthylentriamin) über die $CH_2-Cl$-Gruppen angelagert und dieses Anlagerungsprodukt anschließend mit Epichlorhydrin umgesetzt. Bereits das vorgenannte Anlagerungsprodukt ist stark verzweigt, so daß es bei seiner anschließenden Vernetzung mit Epichlorhydrin zu einer erheblich verknäuelten Molekularstruktur führt, die sich nachteilig bei Verwendung dieses Hilfsmittels bei dessen Einsatz als Retentions- und Entwässerungsmittel auswirkt, weil wegen dieser verknäuelten Molekularstruktur nur ein Bruchteil des Hilfsmittel-Moleküls im o. a Sinn voll wirksam werden kann.

In der in diesem Zusammenhang weiterhin zu nennenden DE-AS 2 127 082 wird ein kompliziertes Verfahren zur Herstellung von Entwässerungs- und Retentionsmitteln beschrieben, wobei durch Vernetzung der Umsetzungsprodukte aus Polyepichlorhydrin und Polyamiden mit Bis-chlorhydrin relativ ungünstige Molekülstrukturen erhalten werden, die die an sich vorhandene hohe kationische Ladung des Moleküls bei einer wie eingangs genannten Verwendung nicht voll zur Entfaltung kommen lassen und somit keine optimale Leistung bei der Papierherstellung zeigen.

Ähnliches trifft für das aus der DE-OS 2 255 586 ersichtliche Produkt, das lediglich als zusätzlichen Baustein Polyäthylenglykol bei sonst prinzipiell äquivalentem Aufbau zeigt, zu.

In der in diesem Zusammenhang weiterhin anzuführenden DE-OS 2 244 513 sind ähnliche Produkte bekanntgeworden, die aus Polyepichlorhydrin, Diamin und Polyalkylenpolyaminen mit anschließender Vernetzung zum Beispiel mit Epichlorhydrin aufgebaut sind, beschrieben. Auch diese Produkte sind jedoch ebenfalls aufgrund der vorgegebenen Struktur nur unzureichend als Flockungs-, Retentions- und gleichzeitig als Entwässerungshilfsmittel bei der Papierherstellung zu verwenden.

Noch andere Produkte sind aus den DE-OS 2 434 816 und der hierzu gehörigen Zusatz-DE-OS 2 515 760 bekanntgeworden. Hier werden aus Polyglykoläthern und Epichlorhydrin hergestellte Polyaminoamide mit Vernetzern bis zur Erzielung einer gewünschten Viskosität umgesetzt. Es entstehen jedoch auch hier für den angestrebten Verwendungszweck in der Papierindustrie ungünstige molekulare Strukturen, wobei insbesondere das Fehlen von Aminogruppen in den großen Äthylenoxidmolekülen eine stärkere pH-Abhängigkeit und so eine eingeschränkte Wirksamkeit zur Folge hat.

In der schließlich noch in diesem Zusammenhang anzuführenden DE-OS 2 436 386 werden Polyäthylenpolyamine mit 15 bis 500 Alkylenimin-Einheiten mit einem Vernetzer, erhalten aus der Reaktion von Polyalkylenglykoläther mit Epichlorhydrin, in Mengen von 0,08 bis 0,001 Mol Vernetzer pro 1 Äquivalent Stickstoff im Polyalkylenpolyamin zur Reaktion und damit zur Vernetzung gebracht.

Abgesehen von den Bedenken, die man bei der Verwendung von Alkyleniminen als reine Ausgangsstoffe wegen ihrer cancerogenen Eigenschaften hat, ist an den hohen technischen Aufwand zur sicheren Durchführung der vorgenannten Reaktion zu denken. Hierdurch werden die Herstellkosten negativ beeinflußt. Ferner können die hier erwähnten Polyalkylenglykole wegen ihrer aus vorstehendem Aufbau bedingten Verknüpfung mit der bestimmten Art anderer Bausteine des Makromoleküls keine besonders günstige Retentions- und Entwässerungsleistung erbringen.

Der vorstehend gewürdigte Stand der Technik beschreibt Produkte, die als Produktbaustein Polyalkylenglykolverbindungen enthalten. Werden diese Produkte als Retentionsmittel verwendet, ist daran zu erinnern, daß Polyalkylenglykole keine von der Fachwelt zur Erzielung einer günstigen Retentionsleistung als notwendig erkannte kationische Ladungen aufweisen.

Daher hat die ständig weiterbestehende Aufgabe der fortgesetzten Verbesserung der Retentionsleistung derartiger Produkte schon seit längerem dazu geführt, auf diesen aus anderen

Gründen bisher für notwendig erachteten Einbau eines Polyalkylenglykolbausteins zu verzichten. Die in diesem Zusammenhang bisher bekanntgewordenen Polyalkylenglykol-bausteinfreien Retentionsmittel werden nun in der folgenden Stand-der-Technik-Würdigung aufgeführt. Zunächst ist hier auf die DE-PS 1 771 814 hinzuweisen, in welcher die Verwendung von basischen Polyaminoamiden zur Erhöhung der Retention von Füllstoffen und Pigmenten bei der Papierherstellung, zur Beschleunigung der Entwässerung von Papierrohstoffsuspensionen und zur Aufarbeitung von Papiermaschinenabwässern durch Filtration, Sedimentation und Flotation durch Zusatz basischer Polyamide zu den Papierrohstoffsuspensionen und/oder Papiermaschinenabwässern beschrieben wird. Hierbei verwendet man als basische Polyamide hochmolekulare wasserlösliche Produkte, die durch Einwirkung von gegenüber Aminogruppen polyfunktionellen Verbindungen auf in Wasser gelöste oder dispergierte basische Polyamide aus mehrwertigen Aminen, Dicarbonsäuren und mindestens drei Kohlenstoffatome enthaltenden Aminocarbonsäuren oder deren Lactame erhalten werden, und zu deren Herstellung aus 1 Val der in den basischen Polyamiden enthaltenen basischen Aminogruppen weniger als 1 Val reaktive Gruppen in den polyfunktionellen Verbindungen verwandt wurden. Hier werden also die Polyalkylenpolyamine mit zum Beispiel Epichlorhydrin vernetzt. Das entstandene, nachträglich sauer eingestellte Produkt besitzt aufgrund der verfahrensmäßig miteinander verbundenen Ausgangsbausteine eine Struktur, in der zum Beispiel kationische Seitenketten fehlen, weswegen eine optimale Reaktions- und Entwässerungsleistung noch nicht erbracht werden kann.

Als Weiterentwicklung in dieser Richtung ist der auf der Basis der französischen Patentschrift 2 094 645 entstandene ältere Vorschlag der Anmelderin in Form der DE-OS 2 353 430 anzusehen. Dieser Vorschlag ist auf die Herstellung und Verwendung von wasserlöslichen Papiererzeugungshilfsmitteln auf Polyaminoamidbasis gerichtet, wobei die in der vorgenannten französischen Patentschrift als älterem Stand der Technik angegebenen dimeren Fettsäuren als Bestandteil des Ausgangsmonomerengemischs zur Herstellung eines retentionswirksamen Makromoleküls bei der Papierherstellung in der vorgenannten DE-OS 2 353 430 durch kurze aber kationaktivere und damit retentionswirksamere Seitenketten ersetzt worden sind. Prinzipiell werden in dieser DE-OS basische Polyaminoamide vor der Vernetzung mit polyfunktionellen Vernetzungsmitteln, wie zum Beispiel Epichlorhydrin, mit Ammoniumverbindungen, hergestellt durch Einwirkung einer polyfunktionellen Verbindung auf ein tertiäres Amin, umgesetzt. Diese bekannte makromolekulare Verbindung zeigt zwar eine wesentlich bessere Retentionsleistung als praktisch alle aus dem davor angeführten Stand der Technik bekanntgewordenen Produkte, jedoch sind auch die hiermit erzielbaren Retentions-, Entwässerungs- und Wasseraufbereitungs-Leistungen bei der Papierherstellung nicht voll zufriedenstellend gewesen.

Die daher fortlaufend weiter bestehende Aufgabe der Schaffung entsprechender Hilfsmittel mit immer weiter gesteigerter Retentionsleistung führte zu der Entwicklung eines anderen als in der vorbeschriebenen DE-OS 2 353 430 angeführten Makromoleküls, nämlich wie es aus den DE-PS 2 502 874 und 2 538 745 (Zusatz zu 2 502 874) ersichtlich ist. Hier werden Produkte mit besonderer Sedimentationsleistung geschaffen, wobei diese durch Verknüpfung von Polyaminoamiden und Polyaminen, die durch Einwirkung von ein- bzw. mehrwertigen Aminen auf das Umsetzungsprodukt aus Dimethylaminen und Epichlorhydrin erhalten werden, mittels Epichlorhydrin hergestellt werden. Auf diese Weise entstehen molekulare Raumstrukturen, die eine recht gute Wirkung bei der Papierfabrikation im sauren und neutralen pH-Bereich gewährleisten, jedoch optimal denkbare und nach wie vor von der Fachwelt gewünschte entsprechende Leistungen noch nicht erreichen.

Zusammengefaßt ist bezüglich des vorstehend aufgeführten Standes der Technik festzuhalten, daß weder die dort beschriebenen Produkte, die Polyäthylinglykole als Baustein noch die Produkte, die Polyaminoamide als Baustein noch sogar die Produkte, die wie die DE-OS 2 434 816 und 2 515 760 sowohl Polyalkylenglykole als auch Polyaminoamide als Bausteine enthalten, eine optimale Retentionsleistung zeigen.

Da die nicht zufriedenstellende Verwendungsfunktion dieser Produkte vermutlich auf »bausteinstandort-abhängige« Gründe des Makromoleküls zurückgehen dürfte, dies jedoch keinesfalls sicher ist, wäre zu erwarten, daß die Fachwelt nunmehr andere als die vorgenannten Wege einschlägt, wobei es nahegelegen hätte, makromolekulare Verbindungen mit Polyalkylenglykol als Baustein schon deswegen zu verlassen, weil bekanntlich Polyalkylenglykole keine positiven oder negativen Ladungen, die ja die Voraussetzung für eine gute Retentionsmittelleistung sind, tragen. Tatsächlich enthalten daher die neuesten bekannten und die relativ besten Retentionsleistungen aufweisenden Produkte, wie sie insbesondere in den DE-PS 2 502 874 und 2 538 745 beschrieben sind, keine Bausteine in Form von Polyalkylenglykol-Verbindungen bzw. deren Derivate mehr.

Im Rahmen der somit weiter bestehenden Aufgabe der Schaffung noch besserer Retentionsmittel ist daher die hier folgende erfindungsgemäße Lösung dieser Aufgabe insofern völlig unerwartet und überraschend, als trotz der dem Fachmann bisher bekannten nachteiligen vorstehend beschriebenen Eigenschaften der Polyalkylenglykolbausteine nunmehr ein noch leistungsfähigeres Kondensationsprodukt geschaffen ist, dessen erfindungsgemäße Zusammensetzung als Baustein unter anderem wiederum Polyalkylenglykolverbindungen aufweist und das dadurch gekennzeichnet ist, daß es ein Reaktionsprodukt C ist, welches aus der Umsetzung von einem aliphatischen Polyethylenglykoletheramin als Teilprodukt A, das durch Einwirkung von a) 0,25 bis 1 Mol, vorzugsweise 0,7 bis 1 Mol, eines Polyalkylenpolyamins der allgemeinen Formel

$$H-[NH-(CH_2)_y]_n-[NH-(CH_2)_z]_n-NH_2$$

wobei y und z eine ganze Zahl zwischen 2 und 4, vorzugsweise 2 und 3; n eine ganze Zahl zwischen 2 und 5 und m eine ganze Zahl zwischen 0 und 5, vorzugsweise zwischen 0 und 3, darstellen, und/oder 0,25 bis 2 Mol, vorzugsweise 0,8 bis 2 Mol, eines Amins der allgemeinen Formel

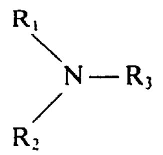

wobei $R_1$ und $R_2$ gleiche oder verschiedene Alkylreste der allgemeinen Formel $C_xH_{2-1}$ oder $C_xH_{2x}-OH$ sind, bei denen x eine ganze Zahl zwischen 1 und 4 ist, und wobei $R_3$ Wasserstoff oder ein Alkylrest der allgemeinen Formel $C_xH_{2x+1}$ sind, bei denen x eine ganze Zahl zwischen 1 und 4 ist, auf das Umsetzungsprodukt c) aus einem Polyethylenglykol (als Polydiol-Baustein) mit Epichlorhydrin gebildet worden ist, mit basischen Polyaminoamiden als einem an sich aus der DE-PS 2 502 874 bekannten Teilprodukt B, das aus wenigstens einem Polyalkylenpolyamin und/oder wenigstens einer Aminocarbonsäure bzw. deren Lactam und/oder Hexamethylendiammoniumadipat gebildet worden ist, wobei die Halogengruppen des Teilproduktes A mit den $-NH-$-Gruppierungen des Teilprodukts B unter Abspaltung von Halogenwasserstoffsäuren und gleichzeitiger Bildung des Zwischenprodukts AB reagieren, und das erhaltene Zwischenprodukt AB mit polyfunktionellen Verbindungen umgesetzt wird.

Obwohl hier als polyfunktionelle Verbindungen Produkte gleichgut verwendbar sind, die z. B. ausgewählt sein können aus einer Gruppe, die unter anderem Epibromhydrin, Epifluorhydrin, die Dihalogenalkane, Glyoxal-bis-acrylamid, bis-Acrylamidoessigsäure, Acrylaminoglykolsäure, Tetraallyloxyethan und andere Verbindungen enthält, ist Epichlorhydrin hier bevorzugt.

Besonders gute Ergebnisse erhält man bei Einhaltung der oben angegebenen Vorzugsbereiche und wenn das Umsetzungsprodukt c) aus 1 Mol des Polyethylenglykols der allgemeinen Formel

$$HO-(CH_2-CH_2-O)_r-H$$

wobei r eine ganze Zahl zwischen 1 und 27, vorzugsweise 1 und 24 ist, wenn 2 Mol Epichlorhydrin gebildet worden ist und wenn 0,5 bis 7, vorzugsweise 2,5 bis 6,8 Mol Teilprodukt B, bezogen auf Polyalkylenpolyamin des basischen Polyaminoamids, umgesetzt worden ist.

Selbstverständlich ist es im Rahmen der Erfindung je nach Wunsch möglich, zwecks Erhaltung einer ganz bestimmten gewünschten Viskosität des Endprodukts C die zum Schluß der Reaktionsverbindung AB zugesetzte polyfunktionelle Verbindung mengenmäßig entsprechend zu variieren. Auf diese Weise läßt sich das Hilfsmittel in relativ breit gefächerter Form variieren, ohne daß seine besonderen Leistungen verringert werden. Beispielsweise kann man in der vorgenannten Weise Hilfsmittel erhalten, die z. B. in 20gewichtsprozentiger wäßriger Lösung bei 25° C eine Viskosität von einerseits 50 bis andererseits 1000 mPa · s aufweisen.

Durch die wie oben angeführten qualitativen und quantitativen Variationsmöglichkeiten des Aufbaus der erfindungsgemäßen Hilfsmittel ist eine Anpassung dieses Mittels an die verschiedensten Verwendungen insbesondere im Rahmen der papierherstellenden Industrie gewährleistet. Da der Aufbau des erfindungsgemäßen Teilprodukts B bereits aus den älteren Druckschriften DE-PS 2 502 874 und 2 538 745 bekannt ist, wird an dieser Stelle mehr auf den Aufbau des erfindungsgemäßen Teilprodukts A eingegangen. Ganz allgemein ist hierbei, soweit nicht bereits oben erwähnt, zu beachten, daß der weder positive noch negative Ladung aufweisende Polyäthylenglykoläther unter Zusatz eines speziellen Katalysators wie zum Beispiel eines Bortrifluorid-Ätherat-Katalysators auf beiden Seiten seines Kettenmoleküls mit je einem Mol Epichlorhydrin umgesetzt wird und danach nur auf einer Seite dieser Kette das dort befindliche Epichlorhydrin wiederum mit dem speziellen Amin der vorgenannten allgemeinen Formeln verbunden wird. Dieses sogenannte Teilprodukt A in Form seines Chloropolyäthylenglykolätheramins wird dann mit dem an sich bekannten Teilprodukt B, nämlich einem basischen Polyaminoamid zu einem Polyäthylenglykoläther-Amin-Polyaminoamid, welches wie vorgenannt Zwischenprodukt AB genannt wird, verbunden. Dieses Zwischenprodukt AB wird dann noch einmal mit einer polyfunktionellen Verbindung, ausgewählt aus der weiter oben angeführten speziellen Gruppe polyfunktioneller Verbindungen, hier bevorzugt mit Epichlorhydrin, so umgesetzt, daß das Endprodukt C schließlich in Form eines Polyäthylenglykoläther-Amin-Polyaminoamid-Epichlorhydrinharzes vorliegt. Obwohl der Gegenstand der Erfindung als Produkt nicht auf ein ganz bestimmtes Herstellungsverfahren beschränkt ist, soll nach diesen vorstehenden, mehr allgemeinen verfahrenstechnischen Hinweisen der Gegenstand der Erfindung an Hand der beispielsweisen Herstellungsverfahren näher erläutert und damit offenbart werden.

Die in allen folgenden Beispielen angeführten Daten und Zahlen für freies Chlorid, für die

Aminzahlen, für die Viskosität und für die Dichte werden stets nach der gleichen entsprechenden und hier folgenden Bestimmungsmethode ermittelt:

1. Chloridbestimmung
(Meßmethode, gleichzeitig Erläuterung zu der folgenden Tabelle 2)

Diese erfolgt nach der bekannten titrimetrischen Fällungsmethode nach F. Mohr. Um möglichen Komplexbildungen des Silberions mit Anionen, die den Endpunkt der Titration stören können, vorzubeugen, wird die zu untersuchende Lösung mit Essigsäure leicht angesäuert.

2. Die Bestimmung der Aminzahl
(Meßmethode, gleichzeitig Erläuterung zu der folgenden Tabelle 3)

Diese wird durch Titration der wäßrigen Harzlösung des o. a. Zwischenprodukts B, wobei 1 g Harz in 100 ml Wasser gelöst ist, mit 0,1 n-Salzsäure gegen Methylrot ermittelt. Die verbrauchte Salzsäure wird in mg KOH, die 1 g reinem Harz äquivalent sind, umgerechnet und so in der betreffenden Beispielstabelle angegeben.

3. Die Bestimmung der Viskosität
(Meßmethode, gleichzeitig Erläuterung zu den folgenden Tabellen 2, 3 und 4)

Diese wird im wesentlichen für die oben angeführten Produkte A, B und C in den entsprechenden Tabellen angegeben und in einem handelsüblichen Höppler-Viskosimeter bei 25° C an 20gewichtsprozentigen wäßrigen Lösungen der entsprechenden Produkte bestimmt (Kugel-Nr. 4).

4. Die Bestimmung der Dichte
(Meßmethode, gleichzeitig Erläuterung zu der folgenden Tabelle 4)

Diese erfolgt mittels eines handelsüblichen Dichtemeßgerätes bei 20° C in der Weise, daß sich ein genormtes Aräometer mit Schrotbelastung in der zu prüfenden 20° C warmen Flüssigkeit hinsichtlich seiner Eintauchtiefe freischwimmend einpendelt. Dann liest man den am unterten Meniskus der Flüssigkeit auf der Zahlenskala des Aräometers befindlichen Wert, der direkt die Dichte angibt, ab.

Es folgen nun die Meßmethoden, die bei der Prüfung der anwendungstechnischen Eigenschaften des Produktes zwecks optimaler Durchführung des Verfahrens für alle in den Beispielen aufgeführten Produkte unter gleichen Bedingungen durchgeführt werden und in den tabellarischen Übersichten 5 bis 6 zusammengestellt sind. Hierbei werden neben den in den Tabellen 1 bis 3 berücksichtigten erfindungsgemäßen Produkten auch andere, wie die nach dem Stand der Technik ausgeführten Vergleichsprodukte (Beispiele 12 bis 14) berücksichtigt.

5. Bestimmung der Entwässerungsbeschleunigung
(Meßmethode, gleichzeitig Erläuterung zu Tabelle 5)

Die charakteristische Mahlgradsenkung in °SR wird nach der Vorschrift des Merkblattes 107 des Vereins der Zellstoff- und Papierchemiker und Ingenieure bestimmt. Sowohl die erfindungsgemäßen wie die Vergleichsprodukte werden in diesen Beispielen als Retentionsmittel in Form ihrer wäßrigen Lösungen der Zeitungspapierstoff-Suspension zugesetzt, wobei die Konzentration dieser wäßrigen Lösungen so gewählt wurde, daß 0,1 bzw. 0,2 g des Retentionsmittels zusammen mit 99,8 g bzw. 99,9 g der atro Gesamtfestbestandteile der Papierstoffsuspension 100 = Gew.-% Gesamtfeststoffanteile ergeben. Da also die Zahlen für Gramm den Zahlen für Gew.-% entsprechen, sind in der Tabelle 5 die zugegebenen Retentionsmittelmengen in Gew.-% im o. a. Sinn angegeben. Die vorgenannte Zeitungspapierstoff-Suspension wird durch mechanische Zerfaserung handelsüblichen Zeitungspapiers und anschließendes stippenfreies Aufschlagen des zerfaserten Produktes in einem üblichen Küchenmixer erhalten. Die Messungen werden bei einem pH-Wert von 6,5 und 4,8, welcher mit einer 1gewichtsprozentigen wäßrigen Alaunlösung eingestellt wird, durchgeführt. Die Faserstoffkonzentration beträgt 2 g/l Wasser. Die im übrigen in dieser Tabelle 5 aufgeführte 0-Probe ist natürlich abhängig von der Wahl des verwendeten Altpapiers.

6. Bestimmung der Füllstoffretention
(Gleichzeitig Erläuterung zur folgenden Tabelle 6)

Auch hier wird wie in der Tabelle 5 zur Erzielung vergleichbarer Werte dieselbe Bestimmungsmethode sowohl für die erfindungsgemäßen Beispiele wie auch für die weiteren Vergleichsbeispiele angewendet. Allgemein erfolgt dabei die Charakterisierung der Füllstoffretention durch den Aschegehalt von Papierblättern, die am »Rapid-Köthengerät« entsprechend dem Merkblatt V/8/57 des Vereins der Zellstoff- und Papierchemiker und Ingenieure (alte Fassung war Merkblatt 108) hergestellt werden.

Das vorgenannte Papierblatt, das der Ermittlung der Retentionsleistung der jeweiligen Vergleichsprodukte dient, besitzt einheitlich die folgende Stoffzusammensetzung:

80% gebleichter Sulfitzellstoff, (27° SR); 15% China-Clay; 5% Titandioxid und 0,5% Alaun (bezogen auf atro Papierfaser). Die Stoffdichte der Papierblätter zeigte ≙ 0,24 g/l Wasser; der pH-Wert der aus dem Papierblatt durch Einbringen in Wasser herstellbaren Fasersuspension beträgt 6,2. Der Retentionsmittelzusatz bei der Stoffaufbereitung beträgt 0,02 Gew.-%, bezogen auf Atro-Retentionsmittel bzw. auf Atro-Papierfaserstoff.

Die in dieser Tabelle 6 angegebenen Aschegehalte sind Gewichtsprozent-Angaben.

Es folgen nun die einzelnen Beispiele, wobei die Beispiele 1a, 1b und 1c ausführlich dargestellt sind, wogegen die folgenden weiteren Beispiele, da sie unter den gleichen Verfahrensbedingungen wie die Beispiele 1a, 1b und 1c durchgeführt werden, in verkürzter tabellarischer Form aufgeführt sind. Zur vollständigen Übersicht über das gesamte hier angeführte Beispielsmaterial wird auch das nachfolgende Textbeispiel 1a, 1b und 1c in die Übersichtstabelle mit aufgenommen.

Aus Platzgründen werden die in den Textbeispielen 1a, 1b und 1c voll ausgeschriebenen Substanznamen in der nachfolgenden Tabellenreihe nur noch in Form ihrer Abkürzungen aufgeführt. Es folgt daher bereits an dieser Stelle eine Erklärung der in der nachstehenden Tabellenreihe verwendeten Kurzbezeichnungen für die chemischen Ausgangsprodukte unter Beifügung einiger Angaben zu ihrer Konzentration oder zu dem Medium, in dem sie gelöst sind.

1. EP:
   Epichlorhydrin, Dichte 1,18 g · $cm^{-1}$; liegt stets als 98gewichtsprozentige Lösung vor.
2. DTRA:
   Diäthylentriamin, liegt vor als 100gewichtsprozentige reine Substanz.
3. Polydiol:
   Polyäthylenglykoläther, liegt vor als Reinsubstanz, die in der Tabelle jeweils angefügte Zahl gibt das mittlere Molekulargewicht dieser Verbindung an, zum Beispiel 400; 600; 1000; 6000 usw.
4. $BF_3$-Ätherat:
   Bortrifluorid-Ätherat der Summenformel $C_4H_{10}BF_3O$; liegt stets als 65gewichtsprozentige Lösung vor.
5. PA:
   Polyaminoamidharzlösung, welche als reaktive Gruppe die sekundären Amine enthält. 1 Mol dieser Verbindung entspricht 1 NH.
6. AS:
   Adipinsäure, liegt vor als 100gewichtsprozentiger Feststoff.
7. CL:
   Caprolactam, liegt vor als 100gewichtsprozentiger Feststoff.
8. AH – S:
   Salz aus Adipinsäure und Hexamethylendiamin, liegt vor als 100prozentiger Feststoff.
9. DÄAM:
   Diäthanolamin, liegt stets als 100gewichtsprozentige Substanz vor.
10. TMA:
    Trimethylamin, liegt stets vor als 45gewichtsprozentige wäßrige Lösung.
11. DMA:
    Dimethylamin, liegt stets vor als 40gewichtsprozentige wäßrige Lösung.

Zur weiteren Erläuterung der nun folgenden Beispielsreihe ist zu den dort aufgeführten tabellarischen Zusammenstellungen erläuternd zu sagen, daß in der Tabelle 1 die erfindungsgemäßen Teilprodukte A, die stets die gleiche Mol-Menge, an Polydiolen jedoch mit unterschiedlichem Molekulargewicht enthalten, mit der doppelten Mol-Menge an Epichlorhydrin umgesetzt werden. Als aminische Komponente wurde Diäthylentriamin (DTRA), Dimethylamin (DMA), Trimethylamin (TMA) und Diäthanolamin (DÄAM) eingesetzt. Die Zwischenanalysenwerte der Teilprodukte A sind dann im Anschluß an die Tabelle 1 aufgeführte Tabelle 2 zusammengefaßt.

Aus Tabelle 3 ist zu entnehmen, daß das Zwischenprodukt B in den betreffenden Beispielen 1b bis 3b stets die gleichen Mengen an Adipinsäuren (AS) und Diäthylentriamin (DTRA) enthält. In Beispiel 1b wurde überdies zusätzlich Caprolactam (CL) und in Beispiel 3b entsprechend zusätzlich das Salz aus Adipinsäure und Hexamethylendiamin (Hexamethylendiammoniumadipat; AH – S) mit verwendet.

Wie aus der dann folgenden Tabelle 4 ersichtlich ist, wurde bei der Herstellung der Endprodukte C das Verhältnis von Teilprodukt A zu Teilprodukt B wie 1 zu 3,33 eingestellt. Nur in dem in dieser Tabelle ebenfalls befindlichen Beispiel 11c wurde das vorstehende Verhältnis geändert und auf 1 zu 6,65 eingestellt.

In Tabelle 5 wurde die Entwässerungsbeschleunigung, gemessen in ° SR, zusammengestellt, wobei in Beispiel 10c sich bereits der Einfluß des hier eingesetzten sehr hochmolekularen Polydiols mit einem durchschnittlichen Molekulargewicht von 6000 insofern negativ zeigt, als dadurch eine weniger starke Mahlgradsenkung im Vergleich zu den erfindungsgemäßen Beispielen resultiert. Obwohl also qualitativ gemäß der Erfindung vorgegangen wurde, wurde quantitativ, nämlich statt der Verwendung von für die Erfindung allein geeigneten Polydiolen mit durchschnittlichen Molekulargewichten 400 und 1000, ein Polydiol mit dem Molekulargewicht 6000 verwendet. Dies führt zu so schlechten Ergebnissen, daß diese gegenüber dem Stand der Technik keine Verbesserung mehr zeigen. Die Tabelle 5 lehrt demnach somit unter anderem, daß Polydiole mit einem durchschnittlichen Molekulargewicht, das möglichst nicht höher als etwa 1200 betragen sollte, verwendet werden sollen, wenn die Produkte erfindungsgemäß aufgebaut und demnach auch eine hervorragende Retentions- bzw. Entwässerungsleistung zeigen sollen. Das Beispiel, dessen Polydiolbaustein ein Durchschnittsmolekulargewicht von 6000 zeigt, ist demnach schon zu den nunmehr im folgenden kurz diskutierten Vergleichsbeispielen zu rechnen. Als weiteres Vergleichsbeispiel ist das in der Tabelle 4 aufgeführte Beispiel 1b[1] zu werten. Es soll zeigen, daß ohne den Einbau des erfindungsgemäßen Teilproduktes A, also nur bei Vernetzung des bekannten Zwischenproduktes B mit Epichlorhydrin das daraus resultierende Hilfsmittel zur Verbesserung der Retention, Entwässerung und Aufbereitung nur wesentlich schlechtere Retentions-, Entwässerungs- und Flockungswerte liefert als Produkte, die gemäß den erfindungsgemäßen Beispielen hergestellt worden sind. In der Tabelle 5 finden sich darüber hinaus noch weitere erfindungsgemäße Beispiele, die den hier wichtigsten Stand der Technik-Veröffentlichungen entnommen sind:

Beispiel 12 entspricht dem Beispiel 1 aus der DE-PS 1 771 814;
Beispiel 13 entspricht dem Beispiel 1 aus der DE-OS 2 353 430;
Beispiel 14 entspricht dem Beispiel 1 aus der DE-PS 2 502 874.

Wie bereits weiter oben ausgeführt, beweist die Gegenüberstellung der erfindungsgemäßen Beispiele zu den Stand-der-Technik-Beispielen bei der Produktanwendung gemäß Tabelle 5, daß die erfindungsgemäßen Produkte hinsichtlich der Entwässerungsbeschleunigung den bisher bekanntgewordenen Produkten deutlich überlegen sind. Im gleichen Sinn ist hierzu auch die aus Tabelle 6 ersichtliche Gegenüberstellung der Füllstoffretentionsleistungen der entsprechenden Produkte zu interpretieren.

Es folgen nun die einzelnen Beispiele:

## Beispiel 1

### 1a) Herstellung des Teilprodukts A

In einem 4 Liter fassenden Glasrundkolben, der mit einem handelsüblichen Ankerrührer, einem Thermometer, einem Rückflußkühler und einem Zulauftrichter ausgestattet ist, werden 160 g Polyäthylenglykoläther mit einem mittleren Molekulargewicht von 400 entsprechend 0,4 Mole vorgelegt und mit 2 ml der Bortrifluorid-Ätherat-Katalysatorlösung (Katalysator-Summenformel: $C_4H_{10}BF_3O$) vermischt. Diese Mischung wird mit Hilfe eines Wasserbades auf 60° C erwärmt und das in der Mischung befindliche Polydiol mit langsam zugefügten 75,5 g Epichlorhydrin, entsprechend 0,8 Mole, umgesetzt. Die Umsetzung erfolgt bei einer Reaktionstemperatur von höchstens 65° C in einer Zeit von 2,5 Stunden in Form einer Anlagerungsreaktion. Das entstandene Produkt, nämlich Polyäthylenglykoläther-bis-$\beta$-hydroxy-$\gamma$-chlorpropyläther, wird nun nach Hinzufügung von 271,7 ml entionisiertem Wasser, welches bei 65°C in zwei Minuten eingerührt wird, mit 35,4 g DTRA, entsprechend 0,336 Mole über einen Zulauftrichter versetzt. Während der hierdurch ausgelösten Reaktion zwischen dem DTRA und dem vorgenannten Zwischenprodukt wird die Temperatur notfalls mittels Wasserkühlung bei 65° C gehalten. Nach einer Stunde sinkt infolge der Beendigung der Umsetzungsreaktion zwischen den vorgenannten Substanzen die Reaktionslösungs-Temperatur. Das auf diese Weise entstandene Teilprodukt A ($\beta$-hydroxy-$\gamma$-chlorpropylpolyäthylenglykoläther-$\beta$-hydroxy-$\gamma$-propylamin) ergab bei seiner Analyse folgende Werte:

| | |
|---|---|
| pH-Wert: | 8,51 |
| Konzentration: | 50,10 Gew.-% |
| freies Chlorid: | 17,00 g entsprechend 60% der Theorie bezogen auf Epichlorhydrin |

1b) Herstellung des Teilprodukts B

In einem als Stahlautoklaven ausgebildeten Druckgefäß mit Rührer, Temperaturmesser in Form eines Thermofühlers und Abdestillationskondensator wurden 1460,2 g Adipinsäure (100gewichtsprozentig entsprechend 10 Mol, fest); 1124,5 g Diäthylentriamin (100gewichtsprozentig entsprechend 10,9 Mol; flüssig) und 226,34 g Caprolactam (100gewichtsprozentig entsprechend 2 Mol; fest) in Form ihrer Reinsubstanzen eingefüllt. Nach Überschichtung des vorgenannten Füllgutes mit sauerstofffreiem Stickstoff, der somit das überstehende Restgasgemisch ersetzt, wird nach Abschluß des Reaktionsgefäßes der Gefäßinhalt auf 160° C aufgeheizt und bei dieser Temperatur 30 Minuten lang unter Rühren belassen. Danach wird das freiwerdende Reaktionswasser abdestilliert (insgesamt 360 ml entsprechend 100% der Theorie). Das nunmehr kondensationswasserfreie Reaktionsgemisch wird darauf weiter bis auf 180° C erhitzt und bei dieser Temperatur zwei weitere Stunden gerührt.

Hierbei reagiert das Gemisch weiter, wobei über die kondensierende Reaktionsmasse ständig Stickstoff geleitet wird.

Nach Abkühlung der entstandenen Polykondensatschmelze auf 135° C werden dieser unter weiterer Abkühlung der Substanz insgesamt 2553 ml Wasser zugesetzt. Die entstandene wäßrige Polyaminoamidharzlösung wird nunmehr untersucht und zeigt folgende Untersuchungsergebnis-Werte:

| | |
|---|---|
| Feststoffgehalt: | 48 Gew.-%; |
| Aminzahl: | 285 mg KOH/l g Harz; |
| pH-Wert: | 10,8; |
| Viskosität: | 360 cP (25° C) |

1c) Herstellung des Endprodukts C

In den bereits im vorstehenden Beispiel 1a beschriebenen 4 Liter Inhalt fassenden Glasrundkolben werden 543,4 g des 50gewichtsprozentigen Teilproduktes A entsprechend 0,4 Mole, bezogen auf Polydiol 400 in Form des $\beta$-hydroxy-$\gamma$-chlorpropyl-polyäthylenglykoläther-$\beta$-hydroxy-$\gamma$-propylamin zunächst mit der gleichen Gewichtsmenge an Wasser versetzt, so daß eine 25gewichtsprozentige Lösung entsteht.

Hierzu werden dann 624,4 g einer 48gewichtsprozentigen Lösung des Teilproduktes B, wie es in vorstehendem Beispiel 1b in bekannter Weise hergestellt worden ist, in Form der basischen Polyaminoamidharzlösung zugegeben und das Ganze dann mit 574,4 g Wasser unter Rühren versetzt. Dann wird unter weiter fortgesetztem Rühren der vorgenannte Gefäßinhalt innerhalb von zwei Stunden auf 80° C erwärmt, wobei die Halogengruppe des Teilprodukts A mit den –NH-Gruppierungen des Teilprodukts B unter Abspaltung von Halogenwasserstoffsäure unter Bildung des Zwischenprodukts AB reagierten. Sobald das Produkt AB entstanden ist, werden 11,35 ml Epichlorhydrin als 98gewichtsprozentiges Produkt mit einer Dichte von 1,18 g · $cm^{-3}$ unter Einhaltung der oben angeführten Temperatur dem Gefäßinhalt zudosiert. Nach 7,5 Stunden Reaktionsdauer zwischen dem o. a. Zwischenprodukt AB und dem diesen zugeführten Epichlorhydrin hört das reaktionsbedingte Ansteigen der Viskosität praktisch auf, womit das Endprodukt C in Form einer hochviskosen klaren Lösung von Polyäthylenglykoläther-Amin-Polyaminoamid-Epichlorhydrinharz entstanden ist. Die Untersuchung des vorstehenden erfindungsgemäßen Endproduktes C ergab folgende Werte:

| | |
|---|---|
| pH-Wert: | 8,35; |
| Feststoffgehalt: | 25,31 Gew.-%; |
| Viskosität: | 225 cp (bei 25° C); |
| Dichte: | 1,056 g/$cm^3$ (bei 20° C) |

Wie bereits oben ausgeführt, werden die folgenden weiteren, in den folgenden Tabellen zusammengefaßten Beispiele in der gleichen Weise wie für das vorstehende Beispiel 1a, 1b und 1c angegeben, unter den gleichen Verfahrensbedingungen durchgeführt. Wie ebenfalls bereits genannt, sind in den folgenden Tabellen die vorstehenden Textbeispiele 1a, 1b und 1c der besseren Übersicht halber noch einmal zusammengefaßt mit aufgeführt.

Versuchsbericht

Beispiel 10 der DE-OS 2 434 816 wurde nachgearbeitet, indem das Polyaminoamid V 12 (hergestellt aus Adipinsäure, Diethylentriamin und Hexamethylendiaminadipat) mit dem Vernetzer V 4 (Umsetzungsprodukt aus Polyethylenglykol und Epichlorhydrin) gemäß der Beschreibung der Beispiele 1 bis 14 auf Seite 12 der DE-OS umgesetzt wurde. Die Viskosität der 18prozentigen Lösung

der Kondensationsprodukte betrug 609 mPa · s (Schergefälle 24,5 $sec^{-1}$ bei 20° C).

Die Entwässerungsbeschleunigung durch Mahlgradsenkung und die Füllstoffretentionsleistung bestimmt durch den Aschegehalt wurde — wie in der vorliegenden Anmeldung angegeben — bestimmt und in die beiliegenden Tabellen 5 und 6 als Vergleichsbeispiel 15 eingetragen.

Tabelle 1

Herstellung der Teilprodukte A

| Beispiel | Ausgangsprodukte Polydiol | | | EP | | $BF_3$-Katalysator | Amin | | | Verdünnungswasser |
|---|---|---|---|---|---|---|---|---|---|---|
| | Type | mol | g | mol | g | ml | Type | mol | g | ml |
| 1a | 400 | 0,40 | 160 | 0,80 | 75,5 | 2,00 | DTRA | 0,336 | 35,4 | 271,7 |
| 2a | 600 | 0,40 | 240 | 0,80 | 75,5 | 2,00 | DTRA | 0,336 | 35,4 | 350,9 |
| 3a | 400 | 0,40 | 160 | 0,80 | 75,5 | 2,00 | DMA | 0,336 | 37,8 | 250,5 |
| 4a | 400 | 0,40 | 160 | 0,80 | 75,5 | 2,50 | TMA | 0,80 | 104,8 | 283,3 |
| 5a | 400 | 0,40 | 160 | 0,80 | 75,5 | 2,00 | DTRA | 0,30 | 31,0 | 267,2 |
| 6a | 400 | 0,40 | 160 | 0,80 | 75,5 | 1,50 | DTRA | 0,364 | 37,5 | 271,7 |
| 7a | 400 | 0,40 | 160 | 0,80 | 75,5 | 1,50 | DÄAM | 0,50 | 52,6 | 288,1 |
| 8a | 1000 | 0,40 | 400 | 0,80 | 75,5 | 2,70 | DTRA | 0,336 | 35,4 | 510,9 |
| 9a | 6000 | 0,40 | 2400 | 0,80 | 75,5 | 3,00 | DTRA | 0,336 | 35,4 | 2510,9 |

Tabelle 2

Zwischenanalyse der erfindungsgemäßen Vorprodukte A aus Tabelle 1

| Beispiel | pH-Wert | Feststoffgehalt | freies Chlorid*) | | Viskosität |
|---|---|---|---|---|---|
| | | Gew.-% | g | Gew.-% | cp/20°C |
| 1a | 8,51 | 50,12 | 17,0 | 60,0 | 51 |
| 2a | 8,46 | 50,22 | 16,2 | 57,0 | 60 |
| 3a | 8,62 | 50,08 | 14,5 | 51,0 | 59 |
| 4a | 8,49 | 50,05 | 18,0 | 63,5 | 52 |
| 5a | 8,56 | 50,07 | 14,3 | 50,5 | 56 |
| 6a | 8,39 | 50,15 | 19,3 | 68,1 | 60 |
| 7a | 8,42 | 49,98 | 14,7 | 52,0 | 59 |
| 8a | 8,64 | 50,30 | 16,2 | 57,1 | 63 |
| 9a | 8,41 | 50,04 | 16,3 | 57,5 | 68 |

*) Bezogen auf EP, durch Aminanlagerung abgespalten.

Tabelle 3

Herstellung des Teilprodukts B

| Beispiel | Ausgangsprodukt (Angaben in Gramm u. Molen) | | | | | | | | Teilprodukt B (Analysenwerte) | | | |
|---|---|---|---|---|---|---|---|---|---|---|---|---|
| | AS | | DTRA | | CL | | AH-S | | Feststoff | Aminzahl mg KOH/ 1 g Harz | Viskosität | pH-Wert |
| | g | mol | g | mol | g | mol | g | mol | Gew.-% | | cp | |
| 1b | 1460,2 | 10 | 1124,5 | 10,9 | 226,34 | 2 | – | – | 48,00 | 285 | 360 | 10,80 |
| 2b | 1460,2 | 10 | 1031,7 | 10,0 | – | – | – | – | 47,95 | 266 | 758 | 10,80 |
| 3b | 1460,2 | 10 | 1031,7 | 10,0 | – | – | 452,68 | 2 | 48,10 | 283 | 380 | 10,60 |

Tabelle 4

Herstellung des erfindungsgemäßen Endprodukts C

| Beispiel | Ausgangsprodukt: Einsatzmengen an Teilprodukt A u. B in Form ihrer 25 gew.-%igen Lösungen | | | | | | Molverhältnis von Teilprodukt A zu B | Zwischenprodukt AB | | Endprodukt (Analysenwerte) | | | |
|---|---|---|---|---|---|---|---|---|---|---|---|---|---|
| | A g | mol | gem. Beispiel in Tabelle 1 | B g | mol | gem. Beispiel in Tabelle 3 | | 25%ige Lösung g | Epichlorhydrin Zusatz zu AB in ml | pH | Feststoff in Gew.-% | Viskosität in cP | Dichte bei 20°C in $g/cm^3$ |
| 1c | 1086,4 | 0,40 | 1a | 1198,8 | 1,33 | 1b | 1 : 3,33 | 2171,8 | 11,35 | 8,35 | 25,39 | 225 | 1,056 |
| 2c | 1086,4 | 0,40 | 1a | 1134,2 | 1,33 | 2b | 1 : 3,33 | 2107,2 | 12,45 | 7,90 | 25,24 | 270 | 1,048 |
| 3c | 1086,4 | 0,40 | 1a | 1336,5 | 1,33 | 3b | 1 : 3,33 | 2309,5 | 10,92 | 8,10 | 25,07 | 230 | 1,050 |
| 4c | 1403,6 | 0,40 | 2a | 1336,5 | 1,33 | 3b | 1 : 3,33 | 2626,7 | 10,37 | 8,15 | 25,10 | 244 | 1,061 |
| 5c | 14,03,6 | 0,40 | 2a | 1198,8 | 1,33 | 1b | 1 : 3,33 | 2489,0 | 10,63 | 7,85 | 25,12 | 215 | 1,049 |
| 6c | 1047,6 | 0,40 | 3a | 1198,8 | 1,33 | 1b | 1 : 3,33 | 2133,0 | 18,62 | 8,05 | 25,29 | 309 | 1,050 |
| 7c | 1247,2 | 0,40 | 4a | 1198,8 | 1,33 | 1b | 1 : 3,33 | 2332,56 | 19,49 | 8,19 | 25,35 | 254 | 1,056 |
| 8c | 1152,4 | 0,40 | 7a | 1198,8 | 1,33 | 1b | 1 : 3,33 | 2237,8 | 16,25 | 7,82 | 25,24 | 295 | 1,051 |
| 9c | 2043,6 | 0,40 | 8a | 1198,8 | 1,33 | 1b | 1 : 3,33 | 3129,0 | 34,70 | 7,65 | 25,41 | 385 | 1,068 |
| 10c | 5020,9 | 0,40 | 9a | 1198,8 | 1,33 | 1b | 1 : 3,33 | 6106,7 | 45,10 | 7,48 | 25,49 | 219 | 1,081 |
| 11c | 543,2 | 0,20 | 1a | 1198,8 | 1,33 | 1b | 1 : 6,65 | 1685,3 | 16,34 | 8,40 | 25,30 | 195 | 1,053 |
| 1c' | – | – | – | 1198,8 | 1,33 | 1b | – : – | – | 15,40 | 9,05 | – | 160 | 1,089 |

Tabelle 5

Entwässerungsbeschleunigung, durch Mahlgradsenkung in °SR gemessen

| Beispiel | Bei Zusatz von Endprodukt C (Beispiel 1c–9c) bzw. von Vergleichssubstanzen (Beispiele 10c bis 14) zu Papierstoffsuspensionen eines pH von | | | | Papierstoffsuspension ohne Zusatz von Endprodukt C bzw. ohne Vergleichssubstanz (0-Proben) bei einem pH von | |
|---|---|---|---|---|---|---|
| | 6,5 in Gew.-% | Mengen von | 4,8 in Gew.-% | Mengen von | 6,5 | 4,8 |
| | 0,1 | 0,2 | 0,1 | 0,2 | | |
| 1c | 33 | 22 | 50 | 44 | 58 | 65 |
| 2c | 32 | 23 | 51 | 45 | 58 | 65 |
| 3c | 31 | 22 | 50 | 43 | 59 | 66 |
| 4c | 33 | 21 | 51 | 44 | 58 | 65 |
| 5c | 32 | 23 | 50 | 44 | 59 | 65 |
| 6c | 32 | 22 | 50 | 43 | 59 | 66 |
| 7c | 31 | 22 | 49 | 44 | 59 | 66 |
| 8c | 34 | 23 | 52 | 45 | 58 | 65 |
| 9c | 36 | 27 | 52 | 46 | 58 | 66 |
| 10c | 48 | 43 | 56 | 53 | 58 | 66 |
| 11c | 34 | 24 | 51 | 46 | 59 | 66 |
| 1b[1] | 47 | 40 | 60 | 54 | 59 | 66 |
| 12*) | 46 | 40 | 59 | 54 | 59 | 66 |
| 13**) | 42 | 33 | 56 | 50 | 59 | 66 |
| 14***) | 38 | 29 | 53 | 48 | 59 | 66 |
| 15****) | 39 | 31 | 55 | 50 | 59 | 66 |

*) (Beispiel 1 aus DE-PS 1 771 814)
**) (Beispiel 1 aus DE-OS 2 353 430)
***) (Beispiel 1 aus DE-PS 2 502 874)
****) (Beispiel 10 aus DE-OS 2 334 816)

Tabelle 6

Füllstoffretentionsleistung

| Beispiel | Aschegehalt in Gew.-% im Papier (atro) |
|---|---|
| 1c | 8,16 |
| 2c | 8,01 |
| 3c | 8,10 |
| 4c | 8,12 |
| 5c | 8,08 |
| 6c | 8,14 |
| 7c | 8,09 |
| 8c | 8,13 |
| 9c | 7,95 |
| 10c | 6,78 |
| 11c | 8,02 |
| $1b_1$ | 7,05 |
| 12 Beispiel 1 aus DE-PS 1 771 814 | 7,14 |
| 13 Beispiel 1 aus DE-OS 2 353 430 | 7,38 |
| 14 Beispiel 1 aus DE-PS 2 502 874 | 7,80 |
| 15 Beispiel 10 aus DE-OS 2 434 816 | 7,44 |

Das erfindungsgemäße Polyethylenglykol-Polyaminoamid-Kondensationsprodukt zur Retentionsverbesserung von ausschwemmbaren Feststoffen, zur Entwässerungsbeschleunigung von Suspensionen und zur rascheren Aufbereitung von industriellen Wässeren, Abwässern und Schlämmen durch Zusatz von basischen wasserlöslichen Polymeren als wäßrige Polymerlösung läßt sich zwar hauptsächlich in der Papierindustrie vorteilhaft verwenden, ist jedoch gleichzeitig auch sehr gut geeignet zur Aufbereitung von Industriewässern, zur Abwasserreinigung sowie zur Schlammkonditionierung in anderen Industriezweigen. Unter den Begriff »Schlammaufbereitung« fällt hierbei die Aufbereitung von Frischschlamm und Belebtschlamm wie auch die an sich bekannten Schlammeindickungs- und Schlammflotationsverfahren, bei denen das erfindungsgemäße Hilfsmittel sehr gut eingesetzt werden kann. Es ist hierbei sehr vorteilhaft, daß diese Hilfsmittel zum Beispiel im Klärprozeß unempfindlich gegen die Hinzufügung einer Reihe verschiedener anderer Stoffe sind, weswegen es ohne weiteres möglich ist, zum Beispiel anorganische Flockungsmittel, wie sie zum Beispiel auf der Basis von Aluminium- und Eisensalzen oder auf der Basis von Kalkverbindungen im Handel sind, zuzusetzen, ohne daß das erfindungsgemäße Hilfsmittel hinsichtlich seiner Verwendungseigenschaften hiervon nachteilig betroffen wird.

Wird das erfindungsgemäße Hilfsmittel in Absetz- und Klärbecken verwendet, empfiehlt sich seine Anwendung in einer Menge von etwa 0,1 bis 4 mg pro Liter der zu klärenden Substanz.

In anderen Fällen, etwa bei der Konditionierung von Abwasserschlämmen, bei der Entwässerung in Trockengelen oder bei der Anwendung mechanischer Verfahren wie zum Beispiel Zentrifugieren kann dem Schlamm das Wasser besser und rascher entzogen werden, wenn man das erfindungsgemäße Hilfsmittel in Mengen von etwa 2 bis 12 kg pro Tonne Trockenschlamm der zu behandelnden Substanz zusetzt.

Soll der zu behandelnde Schlamm stabilisiert werden, ist es zweckmäßig, etwa 50 bis 150 mg des

erfindungsgemäßen Hilfsmittels hierzu pro entsprechender Mengeneinheit des Schlamms diesem zuzusetzen. Die Stabilisierung tritt hierbei mittels Förderung der Bildung reißfester Flocken durch das Hilfsmittel in vorteilhafter Weise ein.

Im Rahmen der als wesentlichstes Verwendungsgebiet für das erfindungsgemäße Hilfsmittel anzuführenden Papierherstellung kann das genannte Hilfsmittel selbstverständlich nicht nur gesondert, sondern auch unter Abmischung mit den bei der Papierherstellung benötigten anderen Stoffen, wie zum Beispiel Farbstoffen, Antioxydantien, optischen Aufhellern und fluoreszierenden Mitteln zugesetzt werden, da das Hilfsmittel gegen diese Stoffe nicht empfindlich ist. In der Praxis wird nämlich oft das vorgenannte Zusatzverfahren vorheriger Abmischung der Zusatzstoffe deswegen gerne angewendet, weil im allgemeinen zum Beispiel optische Aufheller und fluoreszierende Mittel in nur geringen Mengen im Papier benötigt werden, um die gewünschte Veränderung des Erscheinungsbildes des Papiers zu erreichen.

Weitere Anwendungsgebiete des erfindungsgemäßen Hilfsmittels im Rahmen der Papierherstellung beziehen sich auf die vorteilhafte Leistung des Mittels bei der Erzielung einer guten Scherstabilität, die wichtig ist, wenn zum Beispiel Pumpen, Schwingsiebe und andere Vorrichtungen bei der Papierherstellung verwendet werden.

Außer bei der Papierherstellung kann natürlich das erfindungsgemäße Hilfsmittel auch auf ganz anderen als den vorgenannten Gebietsgruppen eingesetzt werden. Als Haarfixiermittel oder bei der Verankerung von an sich hydrophoben Beschichtungsmitteln, die in Form von wäßrigen Dispersionen oder sonstigen Lösungen etwa auf Trägersubstanzen wie zum Beispiel Flächengebilden aller Art aufgebracht werden, läßt sich das Mittel genausogut wie als Verbesserungsmittel für die Naßfestigkeit von Flächengebilden (insbesondere Papier) einsetzen, in letztgenanntem Fall jedoch vorteilhaft nach Sauerstellung des Mittels.

Im allgemeinen ist das erfindungsgemäße Hilfsmittel selbst im basischen Medium recht gut lagerstabil, wenn, wie der Fachmann an sich weiß, bei der Herstellung des Mittels zur Vernetzung zum Beispiel mit Hilfe von Epichlorhydrin nur soviel Vernetzungsmittel wie benötigt zugegeben wird.

Bei unüblichem oder versehentlichem Zugeben des Vernetzungsmittels im Überschuß kann das Mittel trotzdem verwendet werden, muß allerdings dann zwecks Erzielung einer geeigneten Lagerstabilität sauer gestellt werden, womit auch in diesem Fall ein eventuell sonst auftretendes Ausgelieren zuverlässig verhindert wird.

## Patentansprüche

1. Polyethylenglykol-Polyaminoamid-Kondensationsprodukte erhalten durch Umsetzung eines aliphatischen Polyethylenglykoletheramins als einem Teilprodukt A mit basischen Polyaminoamiden als Teilprodukt B, unter Bildung eines Zwischenprodukts AB und Reaktion des erhaltenen Zwischenprodukts AB mit polyfunktionellen Verbindungen, wobei das Teilprodukt A durch Einwirkung von a) 0,25 bis 1 Mol eines Polyalkylenpolyamins der allgemeinen Formel

$$H-[NH-(CH_2)_y]_n-[NH-(CH_2)_z]_m-NH_2$$

wobei y und z eine ganze Zahl zwischen 2 und 4, n eine ganze Zahl zwischen 2 und 5 und m eine ganze Zahl zwischen 0 und 5 darstellen,
und/oder b) 0,25 bis 2 Mol eines Amins der allgemeinen Formel

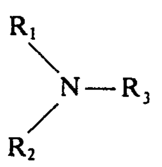

worin $R_1$ und $R_2$ gleiche oder verschiedene Alkylreste der allgemeinen Formel $C_xH_{2x+1}$ oder $C_xH_{2x}-OH$ sind, bei denen x eine ganze Zahl zwischen 1 und 4 ist, und wobei $R_3$ Wasserstoff oder ein Alkylrest der allgemeinen Formel $C_xH_{2x+1}$ ist, bei denen x eine ganze Zahl zwischen 1 und 4 ist, auf das Umsetzungsprodukt c) von einem Polyethylenglykol und Epichlorhydrin gebildet worden ist, das Teilprodukt B aus wenigstens einem Polyalkylenpolyamin und/oder wenigstens einer Aminocarbonsäure bzw. deren Lactam und/oder Hexamethylendiammoniumadipat gebildet worden ist, die Mengenverhältnisse bei der Herstellung des Zwischenprodukts AB so ausgewählt worden sind, daß je 1 Mol, bezogen auf Polyethylenglykol des Teilprodukts A, 0,5 bis 7 Mol bezogen auf Polyalkylenpolyamin des Teilprodukts B zugesetzt wird und das Zwischenprodukt AB durch Umsetzung der Halogengruppen des Teilprodukts A mit den $-NH-$-Gruppierungen des Teilprodukts B unter Abspaltung von Halogenwasserstoffsäuren erhalten worden ist.

2. Kondensationsprodukte nach Anspruch 1, dadurch gekennzeichnet, daß Epichlorhydrin als polyfunktionelle Verbindung verwendet worden ist.

3. Kondensationsprodukte nach Ansprüchen 1 und 2, dadurch gekennzeichnet, daß das Umsetzungsprodukt c) aus 1 Mol des Polyethylenglykols der allgemeinen Formel

$$HO-(CH_2-CH_2-O)_r-H$$

wobei r eine ganze Zahl zwischen 1 und 27 ist, mit 2 Mol Epichlorhydrin gebildet worden ist.

4. Kondensationsprodukte nach Ansprüchen 1–3, dadurch gekennzeichnet, daß das Teilprodukt A durch Einwirkung von 0,7 bis 1 Mol des Polyalkylenpolyamins a), wobei y bzw. z 2 oder 3 ist, und/oder 0,8 bis 2 Mol des Amins b) auf das Umsetzungsprodukt c) erhalten worden ist und anschließend mit 2,5–6,8 Mol des Teilprodukts B umgesetzt wird.

5. Verwendung der Kondensationsprodukte nach Ansprüchen 1–4 als wäßrige Polymerlösung zur Retentionsverbesserung von ausschwemmbaren Feststoffen, zur Entwässerungsbeschleunigung von Suspensionen und zur rascheren Aufbereitung von industriellen Wässern, Abwässern und Schlämmen.

6. Verwendung nach Anspruch 5 in der papierherstellenden Industrie.

**Claims**

1. Polyethylene glycol/polyamino amide condensation products obtained by reacting an aliphatic polyethylene glycol ether amine as a component product A with basic polyamino amides as component product B to from an intermediate product AB and reacting the resulting intermediate product AB with polyfunctional compounds, wherein component product A has been formed by the action of

a) 0.25 to 1 mole of a polyalkylene polyamine of the general formula

$$H-[NH-(CH_2)_y]_n-[NH-(CH_2)_z]_m-NH_2$$

wherein

y and z each represent an integer between 2 and 4,
n represents an integer between 2 and 5 and
m represents an integer between 0 and 5,

and/or

b) 0.25 to 2 moles of an amine of the general formula

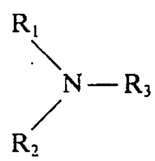

wherein

$R_1$ and $R_2$ are identical or different alkyl radicals of the general formula $C_xH_{2x+1}$ or $C_xH_{2x}-OH$, in which
x is an integer between 1 and 4,

and wherein

$R_3$ is hydrogen or an alkyl radical of the general formula $C_xH_{2x+1}$, in which x is an integer between 1 and 4,

on the reaction product

c) of a polyethylene glycol and epichlorohydrin,

the component product B has been formed from at least one polyalkylene polyamine and/or at least one aminocarboxylic acid or its lactam and/or hexamethylene diammonium adipate, the quantitative proportions in the preparation of the intermediate product AB have been selected such that to each 1 mole, based on polyethylene glycol, of component product A, 0.5 to 7 moles, based on polyalkylene polyamine, of component product B, are added and the intermediate product AB has been obtained by

reacting the halogen groups of component product A with the $-NH-$groupings of component product B with elimination of hydrohalic acids.

2. Condensation products according to Claim 1, characterised in that epichlorohydrin has been used as the polyfunctional compound.

3. Condensation products according to Claims 1 and 2, characterised in that the reaction product c) has been formed from 1 mole of the polyethylene glycol of the general formula

$$HO{-}(CH_2{-}CH_2{-}O)_r{-}H$$

wherein r is an integer between 1 and 27 and 2 moles of epichlorohydrin.

4. Condensation products according to Claims 1 to 3, characterised in that the component product A has been obtained by the action of 0.7 to 1 mole of polyalkylene polyamine a), wherein y and z are 2 or 3, and/or 0.8 to 2 moles of the amine b) on the reaction product c) and is then reacted with 2.5–6.8 moles of the component product B.

5. Use of the condensation products according to Claims 1–4 in the form of an aqueous polymer solution for improving the retention of flushable solids, for accelerating the dewatering of suspensions and for more rapidly working up industrial waters, effluents and sludges.

6. The use according to Claim 5 in the papermaking industry.

**Revendications**

1. Produits de condensation de polyéthylèneglycol-polyaminoamides par réaction d'une polyéthylèneglycoléthéramine aliphatique comme produit partiel A avec des polyaminoamides basiques comme produit partiel B, avec formation d'un produit intermédiaire AB et réaction du produit intermédiaire AB obtenu avec des composés polyfonctionnels, le produit partiel A ayant été formé par l'action de a) 0,25 à 1 mole d'une polyalkylènepolyamine de formule générale

$$H{-}[NH{-}(CH_2)_y]_n{-}[NH{-}(CH_2)_z]_m{-}NH_2$$

dans laquelle y et z représentent un nombre entier entre 2 et 4, n un nombre entier entre 2 et 5 et m un nombre entier entre 0 et 5, et/ou b) 0,25 à 2 moles d'une amine de formule générale

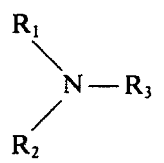

dans laquelle $R_1$ et $R_2$ sont des restes alkyles identiques ou différents de formule générale $C_xH_{2x+1}$ ou $C_xH_{2x}-OH$, dans lesquels x est un nombre entier entre 1 et 4 et $R_3$ est l'hydrogène ou un reste alkyle de formule générale $C_xH_{2x+1}$, dans lequel x est un nombre entier entre 1 et 4, sur le produit de réaction c) d'un polyéthylèneglycol et de l'épichlorhydrine, le produit partiel B ayant été formé à partir d'au moins une polyalkylènepolyamine et/ou au moins un acide aminocarboxylique ou son lactame et/ou l'adipate d'hexaméthylènediammonium, les proportions dans la formation du produit intermédiaire AB étant choisies de telle sorte que l'on ajoute à chaque mole, rapportée au polyéthylèneglycol du produit partiel A, 0,5 à 7 moles rapportées à la polyalkylènepolyamine du produit partiel B et le produit intermédiaire AB ayant été obtenu par réaction des groupes halogènes du produit partiel A avec les groupements NH du produit partiel B avec élimination d'acides halohydriques.

2. Produits de condensation selon la revendication 1, caractérisés en ce que l'on a utilisé l'épichlorhydrine comme composé polyfonctionnel.

3. Produits de condensation selon les revendications 1 et 2, caractérisés en ce que le produit de réaction c) a été formé à partir d'une mole du polyéthylèneglycol de formule générale

$$HO{-}(CH_2{-}CH_2{-}O)_r{-}H$$

dans laquelle r est un nombre entier entre 1 et 27, avec 2 moles d'épichlorhydrine.

4. Produits de condensation selon les revendications 1–3, caractérisés en ce que le produit partiel A a été obtenu par l'action de 0,7 à 1 mole de polyalkylènepolyamine a) dans laquelle y ou z est 2 ou 3 et/ou 0,8 à 2 moles d'amine b) sur le produit de réaction c) et on le fait réagir ensuite avec 2,5–6,8 moles du produit partiel B.

5. Utilisation des produits de condensation selon les revendications 1–4 en solution aqueuse de polymère pour l'amélioration de la rétention de substances solides rinçables, pour l'accélération de la déshydratation de suspensions et pour le traitement plus rapide d'eaux industrielles, d'eaux résiduaires et de boues.

6. Utilisation selon la revendication 5 dans l'industrie de préparation du papier.